(19)

**Europäisches Patentamt**
**European Patent Office**
**Office européen des brevets**

(11) **EP 4 711 752 A1**

(12) **EUROPEAN PATENT APPLICATION**
published in accordance with Art. 153(4) EPC

(43) Date of publication:
**18.03.2026 Bulletin 2026/12**

(21) Application number: **24803518.0**

(22) Date of filing: **09.05.2024**

(51) International Patent Classification (IPC):
*G01N 27/28* (2006.01)        *B01J 19/00* (2006.01)
*G01N 27/333* (2006.01)        *G01N 27/416* (2006.01)

(52) Cooperative Patent Classification (CPC):
**B01J 19/00; G01N 27/28; G01N 27/333;
G01N 27/416**

(86) International application number:
**PCT/JP2024/017218**

(87) International publication number:
**WO 2024/232409 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.05.2023   JP 2023078164
30.04.2024   JP 2024073960**

(71) Applicant: **Canon Kabushiki Kaisha
Tokyo, 146-8501 (JP)**

(72) Inventors:
• **ENOKIDO, Fuka
Tokyo 146-8501 (JP)**

• **FUKATSU, Makoto
Tokyo 146-8501 (JP)**
• **MIURA, Jun
Tokyo 146-8501 (JP)**
• **TANAKA, Masanori
Tokyo 146-8501 (JP)**
• **MAEDA, Harunobu
Tokyo 146-8501 (JP)**
• **MIYAZAKI, Keiji
Tokyo 146-8501 (JP)**
• **YAMAMOTO, Takeshi
Tokyo 146-8501 (JP)**

(74) Representative: **TBK
Bavariaring 4-6
80336 München (DE)**

(54) **ANALYSIS DEVICE AND ELECTROLYTE CONCENTRATION MEASUREMENT METHOD**

(57)    During electrode conditioning and potentiometric ion concentration measurements, Cl ionic crystal arranged to stabilize the potential of the reference electrode flows back to the working electrode and affect the potential at the working electrode. Provided is an analytical device having a hydrophilic or porous channel region enclosed by a hydrophobic channel wall disposed in an inside of or on a substrate, wherein the analytical device has a first channel region and a working electrode, wherein the first channel region has a reference electrode disposed on the substrate and the working electrode is located outside the first channel region.

FIG. 1

EP 4 711 752 A1

**Description**

[Technical Field]

The present invention relates to an analytical device and a method of measuring an electrolyte concentration using the analytical device.

[Background Art]

In recent years, microanalytical chips that can efficiently perform biochemical analyses in a single chip using micro sized fine flow channels have attracted attention in a wide range of fields. Specifically, microanalytical chips are attracting attention not only in biochemistry research but also in various fields such as medicine, drug discovery, healthcare, environment, and food.

In the first half of the 1990s, microanalytical chips were developed in which micron-sized microchannels were formed on glass or silicon using photolithography or molds, and sample pretreatment, agitation, mixing, reaction, and detection were performed on a single chip. As a result, miniaturization of the inspection system, rapid analysis, and reduction of samples and waste liquid were realized.

Electrochemical analysis measures the electric potential between electrodes immersed in a specimen to be analyzed and is widely used in medical and environmental fields. Conventionally, electrochemical analysis is performed by an engineer using sophisticated instruments. Therefore, the use of electrochemical analysis limits to some extent the fields and resources for performing measurements. Therefore, there is a need for a disposable microanalytical chip for electrochemical analysis that is inexpensive and easy to handle, for use in medical activities in developing countries, remote areas, and disaster sites where medical facilities are not equipped, and for use in airports, etc. where the spread of infectious diseases must be stopped at the border.

Electrochemical analysis, such as the quantification of electrolyte ions in solution, requires a stable reference electrode capable of maintaining a constant potential. Conventional glass reference electrodes are expensive and require an internal liquid, so they cannot be miniaturized. In the case of storage, it was not easy to handle because storage in a concentrated solution of ions was required.

In Patent Literature 1, it is proposed that a system includes a microanalytical chip capable of potentiometric measurement using a porous substrate, which enables electrochemical measurement with low cost, easy handling, and high disposal. The microanalytical chip includes one or more working electrodes and one reference electrode on a porous substrate. In such a microanalytical chip, it is necessary to electrically conduct both electrodes by a fluid during measurement. In Patent Literature 1, it is described that in order to obtain a stable potential at the reference electrode during measurement, a highly concentrated aqueous solution of KCl is used as the reference solution and the reference solution is introduced into the reference region including the reference electrode.

And in Non-Patent Literature 1, there is a proposal of a filter paper-based device for measuring Na ion and K ion concentrations. The device has an introduction section for introducing a specimen, and the introduced specimen penetrates into the respective regions of the working electrode and the reference electrode from the introduction section. Further, in Non-Patent Literature 1, it is proposed that a device in which KCl ionic crystal is deposited on the reference electrode to obtain potential stability in the reference electrode. When KCl is dissolved in the specimen during measurement, Cl ions in the reference electrode region are held at a high concentration, and a stable potential of the reference electrode can be obtained.

[Citation List]

[Patent Literature]

PTL 1: U.S. Patent Application Publication No. 2016/033438

[Non-Patent Literature]

NPL 1: Nipapan Ruecha, Orawon Chailapakul, Koji Suzuki and Daniel Citterio "Fully Inkjet-Printed Paper-Based Potentiometric Ion-Sensing Devices" Analytical chemistry August 29, 2017 Published, 89, pp.10608-10616

[Summary of Invention]

[Technical Problem]

During measurement, the reference electrode and the working electrode must be electrically connected to the specimen. On the other hand, at that time, Cl ionic crystal on the reference electrode is dissolved and diffused through the specimen to the working electrode region, which affects the potential of the working electrode and lowers the accuracy of the potentiometric measurement.

To perform measurement with better accuracy, it is preferable that the working electrode and the reference electrode are conditioned with an aqueous electrolyte solution before electrolyte measurement is performed. Ion-exchange resins are generally conditioned before use to remove impurities. For the working electrode having the ion selective membrane, it is considered that the detection accuracy is improved by introducing in advance a conditioning solution containing ions passing through the ion selective membrane and passing through the ion selective membrane. When the reference electrode is also conditioned, ionic crystal containing Cl is dissolved, and Cl ions can easily reach the reference electrode during measurement.

Therefore, to improve the measurement accuracy, it is important to perform the work (conditioning) of applying an appropriate solution to each of the working electrode and the reference electrode before measuring the specimen. However, in the above-described device, since the reference electrode and the working electrode are connected by a channel, the used conditioning solution or Cl ionic crystal such as KCl on the reference electrode dissolved by the conditioning solution may diffuse into the working electrode region and recrystallize around the working electrode. Therefore, at the time of measurement, the backflow crystals around the working electrode dissolve in the specimen, and the concentration of the electrolyte may become higher than the concentration of the actual specimen, and it becomes a problem to reduce the accuracy of the potentiometric measurement.

It is an object of the present invention to provide a microanalytical chip capable of performing stable ion concentration measurement by suppressing the influence on a working electrode caused by the backflow of Cl ionic crystal arranged around the reference electrode or the backflow of the conditioning solution itself, during measurement or conditioning, without changing the size of the device or lengthening the measurement time.

[Solution to Problem]

Provided is an analytical device

having a hydrophilic or porous channel region enclosed by a hydrophobic channel wall provided in an inside of or on a substrate, the analytical device having a first channel region and a working electrode,
wherein the first channel region comprises a reference electrode provided on the substrate, and
the working electrode is provided outside the first channel region.

[Brief Description of Drawings]

[Fig. 1]

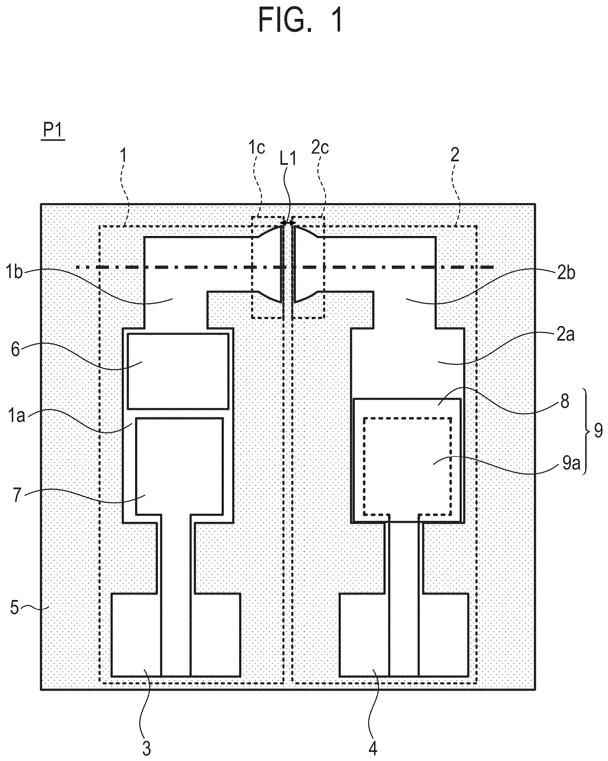

Fig. 1 is a top view of an analytical device in Example 1.
[Fig. 2]

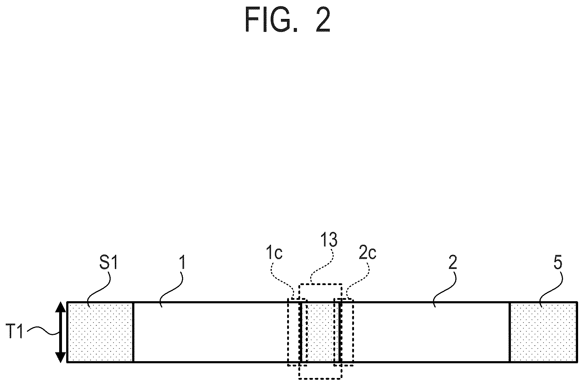

Fig. 2 is a cross-sectional view of the dashed line in Fig. 1.
[Fig. 3]

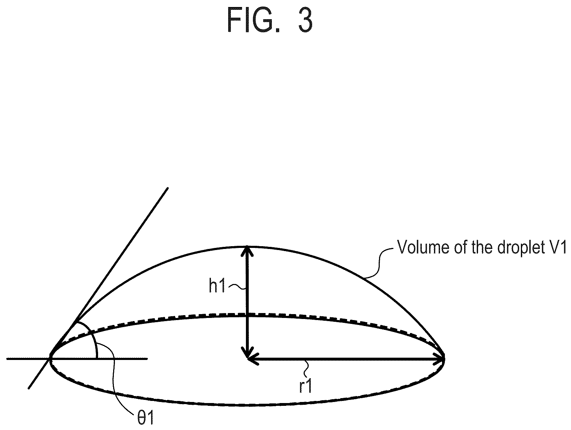

Fig. 3 is a schematic diagram showing the shape of a liquid droplet dropped on a channel wall.
[Fig. 4]

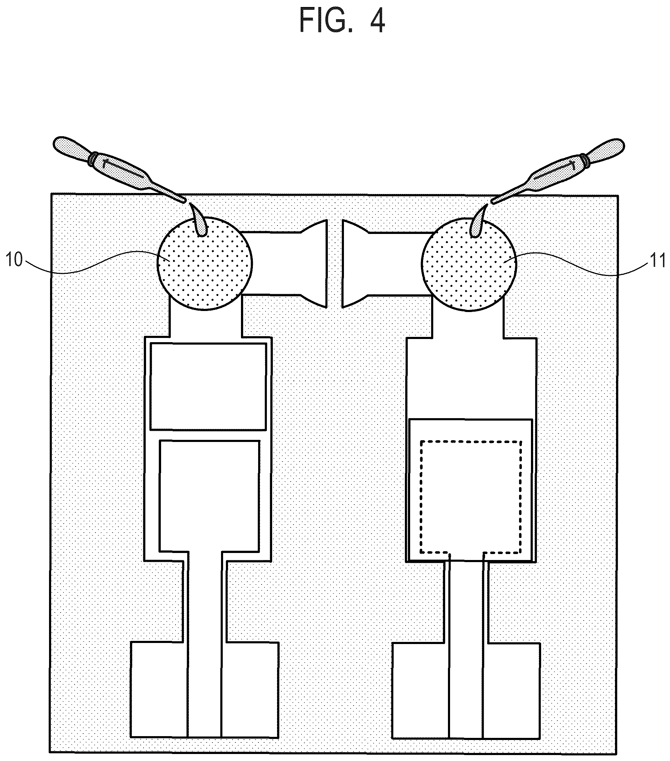

Fig. 4 is a conceptual diagram of conditioning in Example 1.
[Fig. 5]

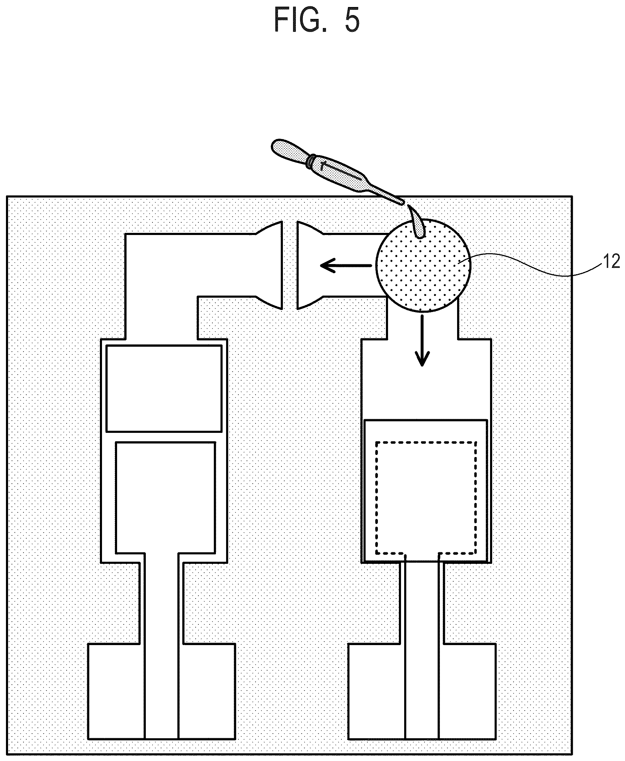

Fig. 5 is a conceptual diagram of pre-measurement specimen introduction in Example 1.
[Fig. 6]

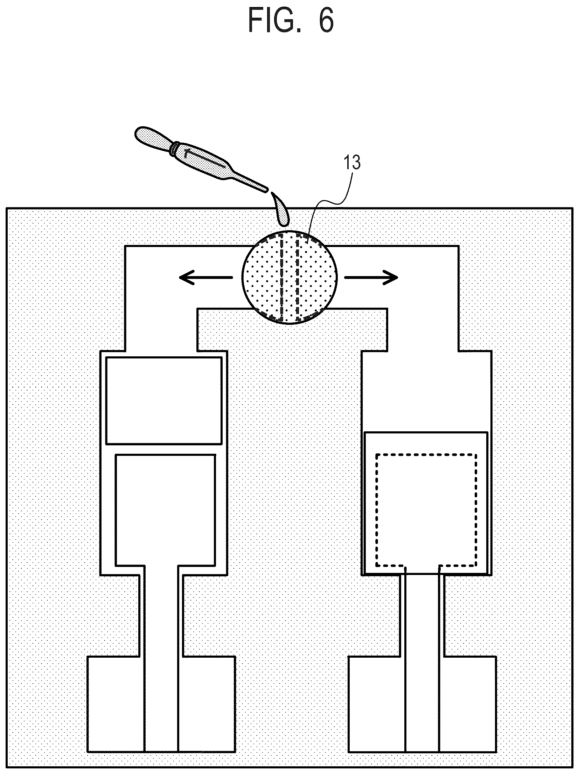

Fig. 6 is a conceptual diagram of a method of introducing a specimen into the introduction section at the time of measurement in Example 1.
[Fig. 7]

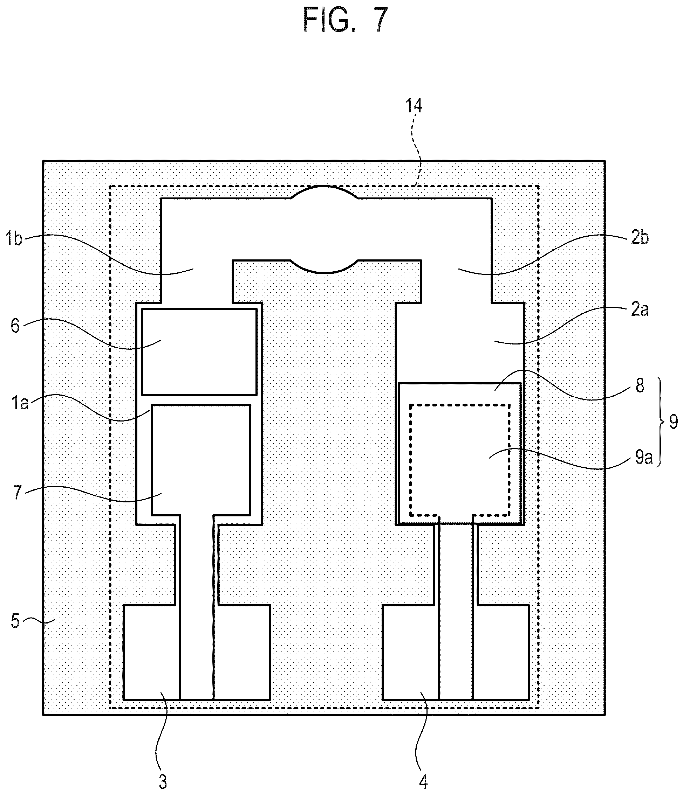

Fig. 7 is a top view of an analytical device in Comparative Example 1.
[Fig. 8]

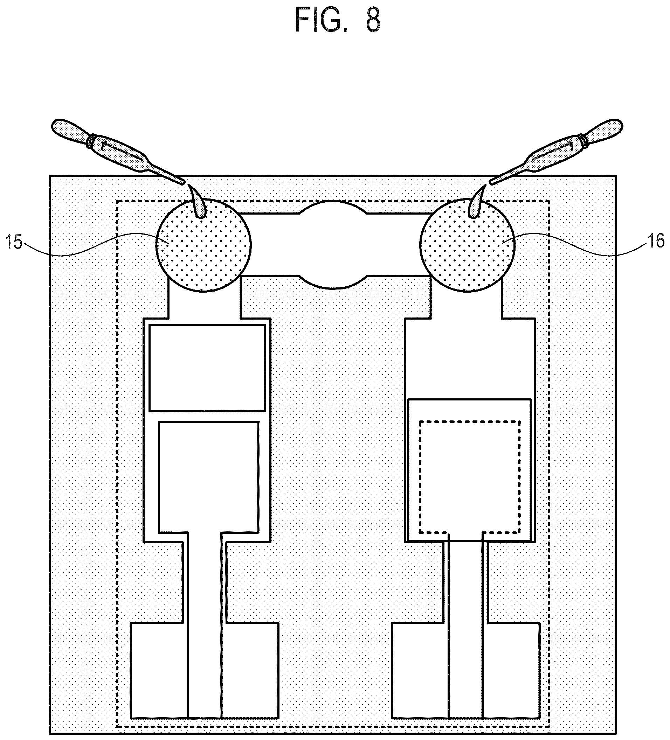

Fig. 8 is a conceptual diagram of conditioning in Comparative Example 1.
[Fig. 9]

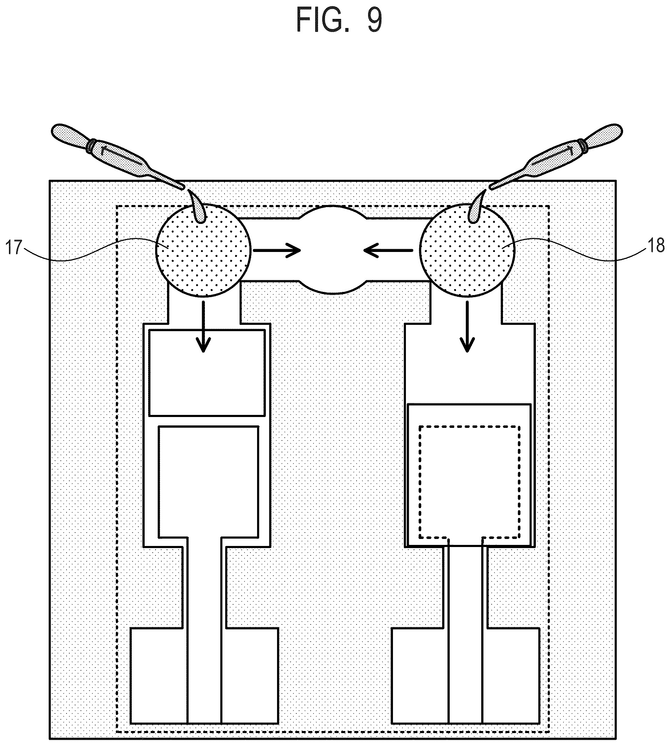

Fig. 9 is a conceptual diagram of specimen introduction method in Comparative Example 1.

[Fig. 10]

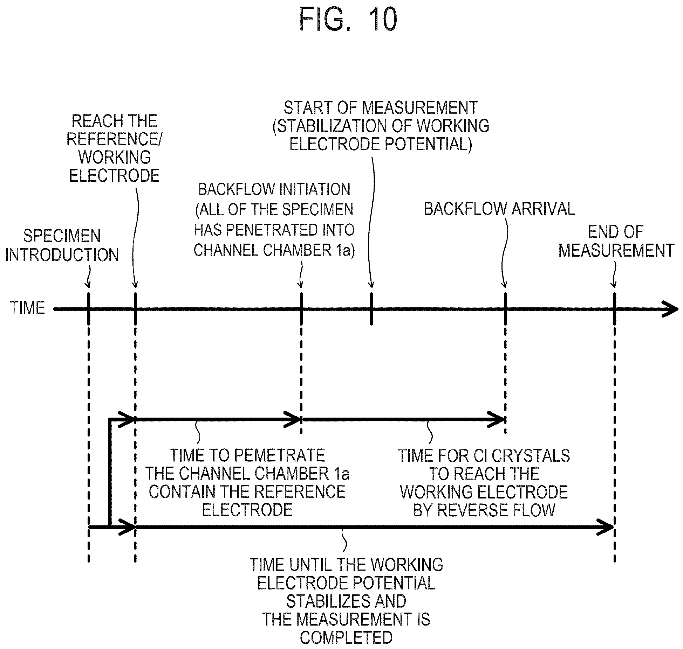

Fig. 10 is a sequence diagram of potentiometric measurement in Comparative Example 1.
[Fig. 11]

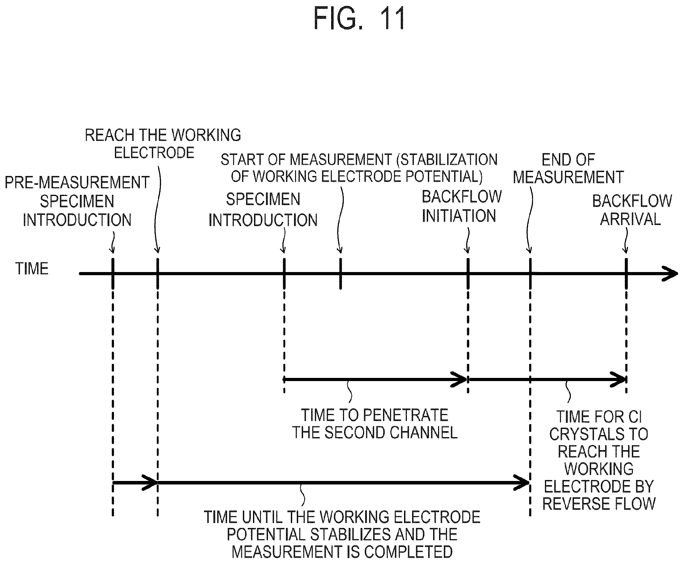

Fig. 11 is a sequence diagram of potentiometric measurement in Example 1.
[Fig. 12A]

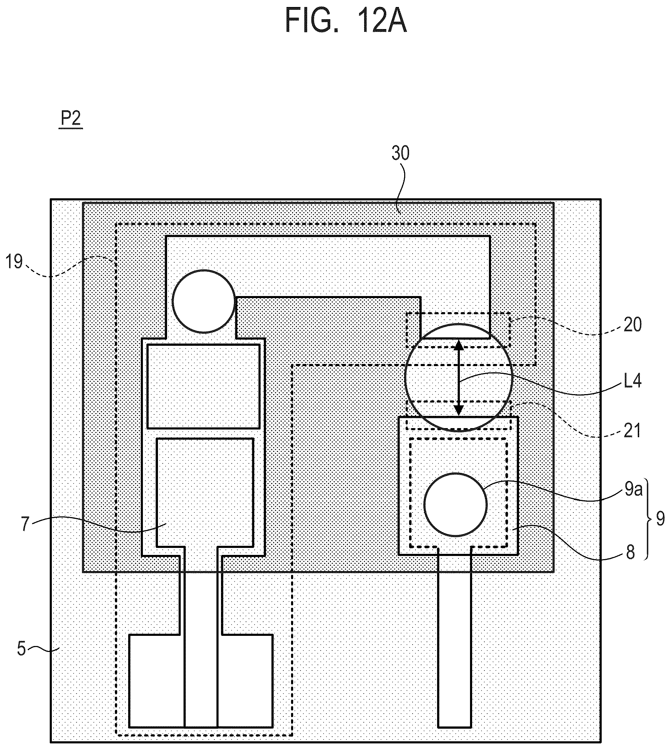

Fig. 12A is a top view of an analytical device in Example 2.
[Fig. 12B]

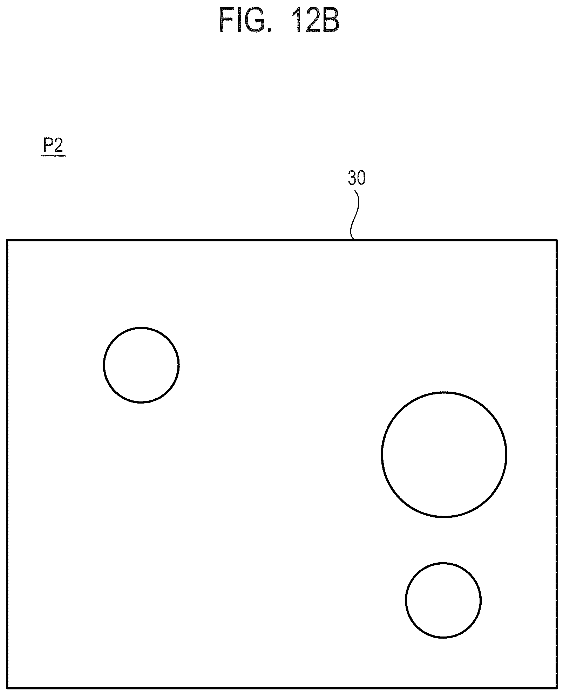

Fig. 12B is a top view of a regulating member of an analytical device in Example 2.
[Fig. 13]

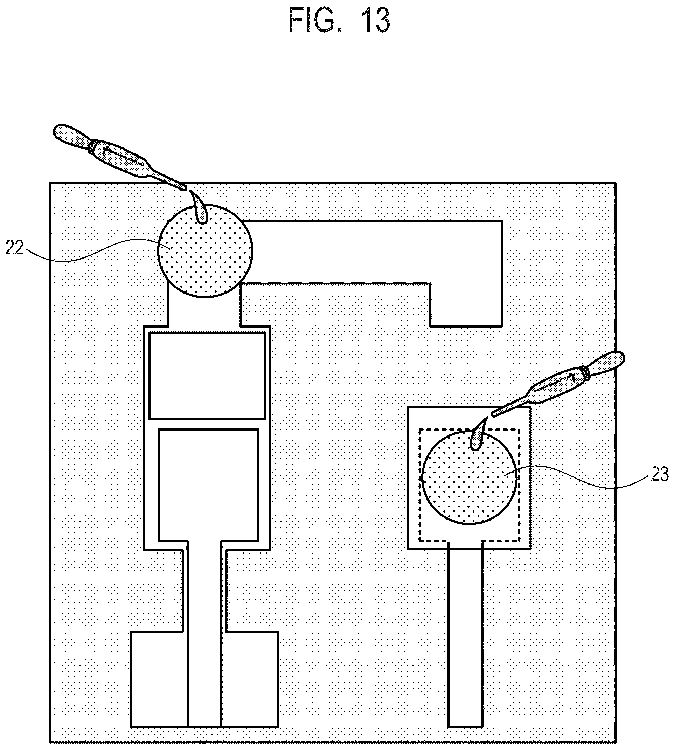

Fig. 13 is a conceptual diagram of conditioning in Example 2
[Fig. 14

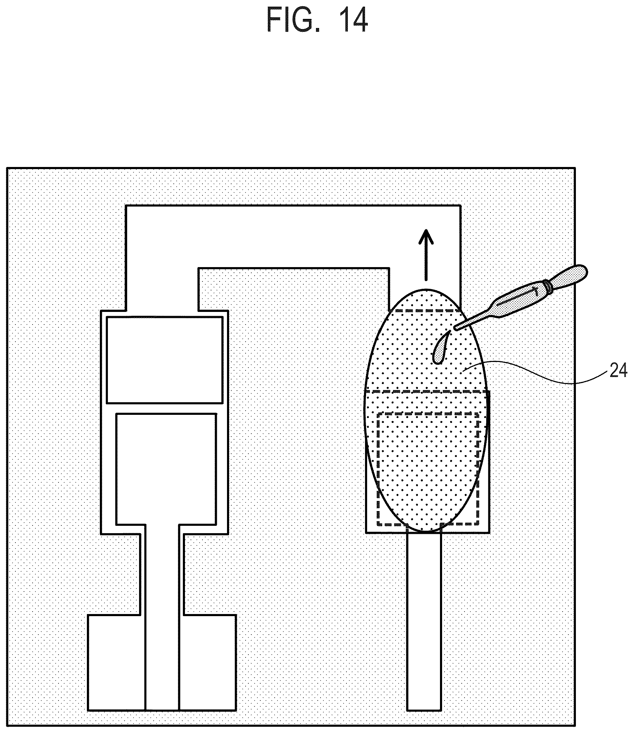

Fig. 14 is a conceptual diagram of introducing a specimen into the introduction section at the time of measurement in Example 2.

[Description of Embodiments]

An example of an embodiment of the present invention will be described below with reference to the drawings, about the analytical device according to the present invention for solving the foregoing problems. However, the following embodiments are exemplary, and the present invention is not limited to the embodiments. In the following figures, components not necessary for the description of the embodiment may be omitted from the figures.

A first embodiment of the present invention is

an analytical device
having a hydrophilic or porous channel region enclosed by a hydrophobic channel wall provided in an inside of or on a substrate, the analytical device having a first channel region and a working electrode,
wherein the first channel region comprises a reference electrode provided on the substrate, and
the working electrode is provided outside the first channel region.

In this embodiment, the device may comprise two or more working electrodes relative to one first channel region.

A second embodiment of the present invention is

an analytical device
having a hydrophilic or porous channel region enclosed by a hydrophobic channel wall provided in an inside of or on a substrate, the analytical device having a first channel region and a working electrode,
the first channel region comprising a reference electrode provided on the substrate,
the working electrode being provided outside the first channel region,
and an analytical device
comprising a second channel region,
the second channel region comprising the working electrode provided on the substrate,
the first channel region and the second channel region being separated from each other by the channel wall.

In this embodiment, the device may comprise two or more second channel regions relative to one first channel region.

And in this embodiment, a portion of the first channel region and a portion of the second channel region are located within a distance L from each other, and the distance L can be set to be less than or equal to the diameter of a droplet of the specimen to be introduced.

Further, a region including a circle having a diameter of L including a portion of each of the first and second channel regions and a portion of a channel wall separating them from each other can be used as a measurement introduction section for introducing a specimen at the time of measurement. Alternatively, each of the first channel region and the second channel region may further comprise an introduction section. The introduction section can be used to introduce a conditioning solution or a specimen before measurement.

In order for the tester to recognize that the measurement introduction section is the place where the specimen is introduced at the time of measurement, and that the introduction section is the place where the conditioning solution and the specimen are introduced before measurement, it is possible to make arrangements such as marking each of the sections or placing a device cover with holes in the corresponding parts.

A third embodiment of the present invention is a method of measuring an electrolyte concentration using an analytical device according to the second embodiment, wherein a specimen is introduced into the measurement introduction section to electrically connect the first channel region and the second channel region, and a potential difference between the first electrode and the second electrode caused by a difference between the reference ion concentration in the first region and the ion concentration derived from the specimen in the second region is measured.

In this embodiment, before introducing the specimen into the measurement introduction section, a first conditioning solution containing chloride ion can be introduced into the first channel region, a second conditioning solution containing an ion to be detected by the working electrode can be introduced into the second channel region, or a specimen be introduced into the second region. A plurality of these operations may be performed.

A fourth embodiment of the present invention is

an analytical device having a hydrophilic or porous channel region enclosed by a hydrophobic channel wall provided in an inside of or on a substrate, the analytical device having a first channel region and a working electrode,
wherein the first channel region comprises a reference electrode provided on the substrate, and
the working electrode is provided outside the first channel region,
and the analytical device,
wherein a portion of the first channel region and a portion of the working electrode are located within a distance L from each other, and the distance L is less than or equal to the diameter of a droplet of a specimen to be introduced.

In the present embodiment, a region including a circle having a diameter of the distance L, including a portion of each of the first channel region and coating membrane and a portion of the channel wall separating them from each other, can be used as a measurement introduction section for introducing a specimen during measurement, and further, each of the first channel region and the working electrode can further comprise an introduction section. The introduction section can be used to introduce a conditioning solution or a specimen before measurement.

A fifth embodiment of the present invention is a method of measuring an electrolyte concentration using the analytical device according to the fourth embodiment,
wherein a specimen is introduced into a measurement introduction section to electrically connect the first channel region and the working electrode, and a potential difference between the reference electrode and the working electrode caused by a difference between a reference ion concentration in the first channel region and an ion concentration of the working electrode derived from the specimen is measured.

In this embodiment, before introducing the specimen into the measurement introduction section, a first conditioning solution containing chloride ion may be introduced into the first channel region, a second conditioning solution containing an ion to be detected by the working electrode may be introduced to the working electrode or a specimen may be introduced to the working electrode. A plurality of these operations may be performed.

[Example 1]

<Configuration of channel>

A schematic view of the analytical device P1 of Example 1 will be described with reference to Figs. 1 and 2 .

Fig. 1 is a simplified top view of the analytical device P1, and Fig. 2 is a simplified cross-sectional view of the analytical device P1 at the dashed line of Fig. 1.

The analytical device P1 of this embodiment is an analytical device which uses a porous substrate as a substrate and comprises a channel region enclosed by a channel wall 5 made of a hydrophobic resin in the inside of the porous substrate, and comprises a first channel region 1 and a working electrode 9 including a base electrode 9a as a working electrode and a coating membrane containing an ion selective compound covering the base electrode 9a (ion selective membrane 8 in this embodiment), and the first channel region 1 comprises a reference electrode 7 provided on the porous substrate, and the working electrode 9 is located outside the first channel region 1. Further, the analytical device of this embodiment comprises a second channel region 2, the second channel region comprises the working electrode 9 provided on the porous substrate, and the first channel region 1 and the second channel region 2 are separated from each other by a channel wall 5.

In this embodiment, a hydrophobic resin was disposed on a paper-made porous substrate S1 having a thickness T1 of 0.1 mm and a porosity of 50%, and then heat-fixed to form a channel pattern as a channel wall 5 through which a specimen cannot penetrate.

The channel pattern includes a first channel region 1 including a reference electrode 7 and a second channel region 2 including a working electrode 9.

In the drawing, the first channel region includes a channel chamber 1a including the reference electrode 7 and the ionic crystal 6, a channel 1b, and a proximity portion 1c, but the shape of the first cannel region is not limited thereto. In this embodiment, the first channel region 1 further includes a channel chamber 3 including a contact portion of the reference electrode 7, but the channel chamber 3 may be omitted.

Similarly, the second channel region 2 includes the channel chamber 2a including the working electrode 9, the channel 2b, and the proximity portion 2c, but the shape of the second channel region is not limited thereto. In this embodiment, the second channel region 2 further comprises a channel chamber 4 including a contact portion of the base electrode 9a of the working electrode 9, but the channel chamber 4 may be omitted.

In this embodiment, the proximity portion 1c, which is the region closest to the second channel region 2 of the first channel region 1, and the proximity portion 2c, which is the region closest to the first channel region 1 of the second channel region 2, are proximate at a distance L1. It is preferable that L1 is a distance at which the specimen introduced into the introduction section at the time of measurement touches both the proximity portion 1c and the proximity portion 2c, and the distance L1 is set to 1 mm in this embodiment.

In addition, the distance L1 between the proximity portion 1c and the proximity portion 2c is preferably equal to or less than the diameter of the droplet of the specimen to be introduced. Fig. 3 is a simplified view showing a droplet of a specimen dropped on the channel wall 5. The diameter of the droplet of the specimen dropped on the channel wall 5 is 2r1, the height is h1, the volume is V1, and the contact angle is θ1. Assuming that the droplet is part of a sphere, equation (1) is obtained from the A half-angle method, which is generally used to measure the contact angle.
[Equation 1]

$$\tan\theta1 = \frac{h1}{r1} \tag{1}$$

And the volume of the ball cap, which is a part of the ball, is expressed by equation (2).
[Equation 2]

$$V1 = \frac{1}{6}\pi h1(3r1^2 + h1^2) \tag{2}$$

From equations (1) and (2), the diameter of the droplet of the specimen is expressed by equation (3) from the volume and contact angle of the droplet dropped onto the channel wall.
[Equation 3]

$$2r1 = 2 \times \sqrt[3]{\frac{6V1}{\pi \tan\frac{\theta1}{2}\left(3 + \tan^2\frac{\theta1}{2}\right)}} \tag{3}$$

Therefore, the distance L1 satisfies the equation (3)'.
[Equation 4]

$$L1 \leqq 2r1 = 2 \times \sqrt[3]{\frac{6V1}{\pi \tan\frac{\theta1}{2}\left(3 + \tan^2\frac{\theta1}{2}\right)}} \tag{3}'$$

In this embodiment, since 2r1=7.29 mm is calculated from θ1=89.4° and V1=10 μL, L1 is set to 1 mm.

In this embodiment, a material made of paper is used as the porous substrate, but the porous substrate is not limited thereto. The porous substrate may have a moderate porosity for providing capillary action to the liquid, may have a porous structure in the inside such as a mesh-like structure such as a continuous bubble or nanofiber, and may be composed of resin, glass, inorganic substrate, cloth, metal paper, or the like. The porosity can be appropriately selected depending on the purpose and is preferably from 20% to 90%. If the porosity exceeds 90%, the strength of the substrate may not be maintained, and if it is less than 20%, the permeability of the sample solution may decrease.

The porosity (%) is calculated from the following formula:

porosity (%) = (true density - apparent density) / true density × 100.

The apparent density (g/cm$^3$) is calculated from the following formula:

$$\text{apparent density (g/cm}^3) = \text{basis weight (g/m}^2) / \text{thickness (mm)} \times 1000.$$

As the hydrophobic resin for forming the channel wall, polyester resin, vinyl resin, acrylic resin, styrene-acrylic resin, polyethylene, polypropylene, polyolefin, ethylene-vinyl acetate copolymer resin, ethylene-acrylic acid copolymer resin and the like may be used without particular limitation.

As a method of disposing the hydrophobic resin, there can be mentioned a method in which a thermoplastic hydrophobic resin is applied to the surface of a porous substrate using an electrophotographic apparatus to form a channel pattern, which is melted by heat and permeated into the porous substrate. In this case, toner particles can be cited as a preferred example of thermoplastic resin. This method can be referred to Japanese Patent Laid-Open No. 2021-37612. The hydrophobic resin may be arranged not only by an electrophotographic apparatus but also by a method such as an inkjet printer or a wax printer.

In this embodiment, toner particles were arranged as a hydrophobic resin, and then a channel pattern was formed by heat fixing.

In this embodiment, the proximity portion 1c of the first channel region 1 is the region closest to the second channel region 2, but the present invention is not limited thereto. The proximity portion 1c may be within the first channel region 1 and within a range where the electrolyte concentration measuring function of the reference electrode 7 is not lost, and the proximity portion 2c may also be within the second channel region 2 and within a range where the electrolyte concentration measuring function of the working electrode 9 is not lost. The distance between the proximity portion 1c and the proximity portion 2c is set to 1 mm, but the distance is not limited to this and may be within a range that can be measured by a method of measuring an electrolyte concentration described later.

<Prescription of electrode>

The prescription of the electrode used in this embodiment will be described.

The first channel region 1 has a reference electrode 7 using Ag/AgCl. In this embodiment, an example is shown in which the reference electrode 7 comprises only a base electrode. The reference electrode 7 has a shape in which the electrode continuously extends from the first channel region 1 to the upper part of the channel wall 5 as a contact point during measurement. Further, 2.5 mg of NaCl ionic crystal 6 was arranged on the upstream side of the reference electrode 7 in the first channel region 1.

On the other hand, a base electrode 9a of a working electrode 9 using PEDOT: PSS (a dispersion of polyethylenedioxythiophene and polystyrene sulfonic acid) was provided in the second channel region 2. The base electrode 9a is formed so that the electrode extends continuously from the inside of the second channel region 2 to the upper part of the channel wall 5. In the second channel region 2, an ion selective membrane 8 for selecting Na was formed as a coating material containing a compound having ion selectivity to cover the base electrode 9a. The ion selective membrane 8 contained 3wt% of bis[(12-crown-4) methyl] 2-dodecyl-2-methylmalonate (Bis(12-crown-4)) as a compound having ion selectivity and potassium tetrakis (4-chlorophenyl) borate as an anion eliminating agent. The ion selective membrane 8 was formed of the composition containing 3wt% of bis[(12-crown-4) methyl] 2-dodecyl-2-methylmalonate (Bis(12-crown-4)), 0.5wt% of potassium tetrakis (4 chlorophenyl) borate, 64wt% of o-nitrophenyloctyl ether and 32.5wt% of polyvinyl chloride. Thus, the working electrode including the base electrode 9a and the ion selective membrane 8 covering the base electrode 9a was prepared.

In this embodiment, the reference electrode 7 and the working electrode 9 are formed of the above-described shapes and materials, but the present invention is not limited thereto. A solution of a constant concentration is required to reach the reference electrode 7 at all times during measurement, and if a saturated ion solution is introduced into the second channel region 2 during measurement, the ionic crystal 6 may not be arranged. The material of the ionic crystal 6 may contain Cl ions and is not limited to NaCl. In addition, the mass of the ionic crystal 6 to be arranged may be within a range of a mass that becomes a saturated solution when the Cl ionic crystal is dissolved in pure water having a volume equivalent to the volume of the first channel region 1 and is not limited to the above. In the present embodiment, the position is formed upstream of the reference electrode in the channel A, but the present invention is not limited thereto and may be covered over the reference electrode.

As the base electrode, in addition to Ag/AgCl and PEDOT/PSS, an electrode using carbon or the like, can be used without any particular limitation. For the fabrication of an electrode using Ag/AgCl or carbon, for example, reference can be made to Patent Literature 1. For the fabrication of an electrode using PEDOT/PSS, for example, reference can be made to Non-Patent Literature 1. The base electrode may be selected according to the required characteristics of the device such as cost and performance.

The coating material containing the compound having ion selectivity may be any generally used coating material having sensitivity to target ions and sufficient selectivity to interfering ions. The coating material containing the compound having ion selectivity is specifically an ion selective membrane. The compound having ion selectivity is not particularly limited, but preferably includes an ionophore and an anion remover having ion selectivity. As the ionophore, 12-crown 4-ether having a crown ether structure can be exemplified, and as the anion removing agent, sodium tetraphenylborate (NaTPB) can be exemplified. Any known material can be used for the ion selective membrane, and reference can be made, for example, to pages 138 to 140 of "I want to measure ion concentration with an electrode" published by Dojindo Laboratories Co., Ltd.

The ion selective membrane can contain a polymer compound for maintaining its structure. Examples of the polymer compound include polyvinyl chloride (abbreviated as PVC) and a copolymer of vinyl chloride and vinyl acetate. The ion selective membrane can also include a plasticizer to enable the ionophore to operate. Known plasticizers can be used, but lipophilic ion exchange materials that act as lipophilic ion exchange in ion selective membranes are more preferable, and examples of known materials include 2-nitrophenyloctyl ether (abbreviated as NPOE), bis (2-ethylhexyl) sebacate (abbreviated as DOS), bis (2-ethylhexyl) adipate (abbreviated as DOA), di-n-octylphenylphosphonate (abbreviated as DOPP), and the like.

The ion selective membrane 8 can be prepared by mixing an appropriate amount of each of the above-mentioned components, dissolving or dispersing them in THF or cyclohexanone as a solvent, and applying the obtained solution on a base electrode (Ag/AgCl electrode) on which an intermediate layer such as NaCl is laminated, for example, by an ink jet method. The method of applying the ion selective membrane 8 is not limited to the inkjet method, and a dispenser, screen printing or the like may be used as appropriate. The ion selective membrane can be laminated on the base electrode after adjusting the viscosity of the solution in accordance with each application method.

<Conditioning>

Conditioning refers to the operation of applying an appropriate solution to the first and second channel regions prior to measuring a specimen to improve measurement accuracy.

The conditioning performed in this embodiment will be described with reference to Fig. 4.

Conditioning was performed prior to measurement. In this embodiment, an introduction section 10 in the first channel region 1 and an introduction section 11 in the second channel region 2 are used as the introduction sections. The introduction section 10 and the introduction section 11 may be located within the first channel region 1 and the second channel region 2, respectively, the introduction section 10 may be located above the reference electrode 7 or above the ionic crystal 6 as long as it does not touch the second channel region 2, and the introduction section 11 may be located above the ion selective membrane 8 as long as it does not touch the first channel region 1.

10 $\mu$L of NaCl 3 mol/L aqueous solution was used as the conditioning solution S2 introduced into the first channel region 1. Further, 10 $\mu$L of NaCl 1 mmol/L aqueous solution was used as the conditioning solution S3 introduced into the second channel region 2. After introduction into the respective introduction sections, the conditioning solution permeated into the respective channels of the first channel region 1 and the second channel region 2.

In this embodiment, a solution having the above composition is used as the conditioning solution S3, but the composition is not particular limited as long as the material contains an ion passing through the ion selective membrane 8. In addition, although the above-mentioned solution is used as the conditioning solution S2 in this embodiment, the present invention is not limited to this within the range where measurement is possible.

As an example of conditioning of the first region provided with the reference electrode is to introduce an aqueous solution containing Cl ion, and more specifically, an aqueous solution containing NaCl or KCl, whereby the ionic crystal containing Cl is dissolved and can easily reach the reference electrode during measurement.

As an example of conditioning of the second region provided with the working electrode, is to introduce a conditioning solution containing an ion passing through the ion-selective membrane in advance. Also, the specimen itself can be introduced prior to measurement (pre-measurement specimen introduction), which is also an aspect of conditioning.

In this embodiment, as will be described below, a specimen was introduced into the second region provided with the working electrode 9 before measurement (pre-measurement specimen introduction). In this case, the introduction section 12 in the second channel region 2 shown in Fig. 5 was used. Incidentally, pre-measurement specimen introduction is also an aspect of conditioning.

In this embodiment, both above-described conditioning and pre-measurement specimen introduction were performed twice for the second region, but both may be performed or only one may be performed. Further, different introduction sections may be provided for each of them (that is, the introduction sections 11 and 12 may be different), or a common introduction section may be used (that is, the introduction section 11 and the introduction section 12 may be the same or may overlap).

That is, in this embodiment, in addition to the conditioning described above, 30 $\mu$L of the specimen was dropped into the introducing section 12 as the pre-measurement specimen introduction. After introduction, the specimen was wetted and spread in the second channel region 2 by a capillary phenomenon and reached the ion selective membrane 8. Upon reaching the ion selective membrane 8, ions in the specimen were taken into the ion selective membrane and reacted with the working electrode 9. However, at this time point, the first channel region 1 and the second channel region 2 were not electrically connected.

<Measurement>

30 seconds after the first introduction of the specimen, 10 μL of the specimen was dropped into the measurement introduction section 13 (second introduction of the specimen). Since the measurement introduction section includes a part of the first channel region 1 and a part of the second channel region 2, after the second introduction of the specimen into the measurement introduction section 13, the specimen was wetted and spread in the first channel region 1 by capillary action, and the regions of the first channel region 1 and the second channel region 2 were electrically connected by the specimen dropped into the measurement introduction section 13. While the specimen dropped during the second introduction of the specimen permeated the first channel region 1, ions contained in the specimen dropped during the first introduction of the specimen were selected by the ion selective membrane 8, and the measurement potential of the working electrode required for electrolyte concentration measurement was stabilized. Thereafter, when the specimen dropped into the measurement introduction section dissolved the ionic crystal 6 and reached the reference electrode 7, the concentration measurement of the specimen became possible, and the measurement of the specimen was completed in a predetermined measurement time.

In this embodiment, by delaying the timing of the second introduction of the specimen as compared with the first introduction of the specimen, the specimen reaches the ion selective membrane and is ion-selected, and then the specimen penetrates the reference electrode 7, so that the potential of the working electrode is easily stabilized when the specimen dropped in the second introduction of the specimen reaches the reference electrode 7.

[Comparative Example 1]

Comparative Example 1 will be given to explain the effect of Example 1 in more detail.

<Configuration of channel>

Fig. 7 is a schematic diagram of an analytical device related to Comparative Example 1. In this comparative example, the configuration of the analytical device is the same as that of Example 1 except that the first channel region and the second channel region are not provided, and the reference electrode 7 and the working electrode 9 are provided in the single channel region 14.

<Method of conditioning>

The method of conditioning performed in this comparative example will be described with reference to Fig. 8.

As in Example 1, conditioning was performed before the measurement of the electrolytic concentration. In this comparative example, as in Example 1, two introduction sections, an introduction section 15 and an introduction section 16, were provided as introduction sections. The conditioning solution S2 acting on the reference electrode and the ionic crystal was dropped into the introduction section 15 using 10 μL of a 3 mol/L NaCl aqueous solution. Further, the conditioning solution S3 acting on the ion selective membrane was dropped into the introduction section 16 using 10 μL of a 1 mmol/L NaCl aqueous solution. At this time, both the conditioning solutions penetrated into the single channel region 14 and were mixed in the single channel region 14. When the conditioning solution reaches the ionic crystal 6, not only the conditioning solution in contact with the reference electrode 7 but also ions derived from the ionic crystal may flow backward through the conditioning solution to the region of the working electrode 9.

<Measurement of specimen concentration>

The measurement of the specimen concentration performed in this comparative example will be described with reference to Fig. 9.

In the case of this comparative example, since the channel region is single, there is no measurement introduction section (including a portion of each of the first channel region and the second channel region and a portion of a channel wall separating them from each other).

Specimens were introduced from the introduction section 17 and the introduction section 18. The specimen introduced into the introduction section 17 penetrated into the reference electrode 7 in the channel chamber 1a and the introduction section 18 side, and the specimen introduced into the introduction section 18 penetrated into the working electrode 9 in the channel chamber 2a and the introduction section 17 side simultaneously and reached the reference electrode 7 and the working electrode 9 after a predetermined time passed. The specimen penetrating to the reference electrode 7 side dissolves the ionic crystal 6 containing Cl in the same manner as in Example 1, becomes a Cl ion solution of a saturated concentration, reaches the reference electrode 7, and reacts with the electrode.

On the other hand, in the specimen reaching the working electrode 9, ions contained in the specimen are selected by the ion selective membrane 8. However, since the specimen completely filled the channel chamber 1a and there was no permeable region, a flow from the reference electrode side to the introduction portion 18 side in which the specimen had already permeated occurred. As a result, the saturated concentration of the Cl solution (NaCl solution in this comparative example) flowed back toward the working electrode side.

<Effect of specimen concentration measurement in Example 1>

Regarding the temporal superiority of the measurement of the specimen, an image diagram showing the behavior of the specimen after introduction in Comparative Example 1 will be described with reference to Fig. 10, and an image diagram showing the behavior of the specimen after introduction in Example 1 will be described with reference to Fig. 11.

In Comparative Example 1, the specimen was introduced into the introduction section 17 and then reached the reference electrode 7 or the working electrode 9. After the specimen reaches both electrodes, it takes a certain amount of time from the start of the potentiometric measurement to the completion of the measurement when the potential on the measuring working electrode side is stabilized. Further, after the specimen reached the reference electrode, the NaCl crystal provided on the upper part of the reference electrode was dissolved to become a saturated NaCl solution, which permeated into an unpermeated region in the first channel region and filled the channel chamber 1a. Then, as the flow to the unpenetrated part became slow, the specimen which became saturated NaCl solution started to flow back to the working electrode side, and the highly concentrated specimen reached the working electrode. In this comparative example, the measurement target was K ions, but a part of Na ions also passed through the selective membrane of K ion selectivity, and a high concentration of Na affected the measurement.

In Embodiment 1, the specimen introduced into the introduction section 12 as the pre-measurement specimen introduction reached the working electrode 9. After the specimen reached the working electrode 9, the specimen was dropped into the measurement introduction section at the timing when the potential on the side of the measuring working electrode was stabilized. Since the specimen has already reached the working electrode 9, the measurement can be started at the timing when the specimen dropped into the measurement introduction section reaches the reference electrode 7. Thereafter, as the flow to the unpenetrated portion of the reference electrode region became gentle, the specimen that became a saturated NaCl solution started to flow back toward the working electrode side, but since the measurement could be started in a stable state of the working electrode 9, the measurement could be completed before the backflow specimen reached the working electrode 9.

[Example 2]

<Configuration of analytical device>

The analytical device P2 according to Example 2 will be described with reference to Figs. 12A and 12B. Fig. 12A is a top view of the analytical device P2 and Fig. 12B is a top view of the regulating member 30. As shown in Fig. 12A, the analytical device P2 of this example is an analytical device having a channel region enclosed by a channel wall 5 formed of a hydrophobic resin in the inside of a porous substrate, and has a first channel region 19 and a working electrode 9 covered with a coating membrane (ion selective membrane 8 in this example) containing a compound having ion selectivity, wherein the first channel region 1 has a reference electrode 7 provided on the porous substrate, and the working electrode 9 is located outside the first channel region 19. The working electrode 9 is formed on the channel wall 5 and has no second channel region. A regulating member 30 (shown in dark gray) is arranged so as to cover the channel region except for the introduction section of the conditioning solution and the specimen introduction section.

In this example, the first channel region 19 and the working electrode 9 are located such that the distance L4 between the proximity portion 20, which is the region closest to the working electrode 9 in the first channel region 19, and the proximity portion 21 including the ion selective membrane 8, which is closest to the first channel region 19, is 1 mm.

The method of forming the porous substrate and the channel wall is the same as that of Example 1.

In this example, the regulating member 30 shown in Fig. 12B is provided on the upper part of the porous substrate 5. As the regulating member 30, a polyethylene terephthalate sheet having a thickness of 0.1 mm is used as a member in which the specimen or the like does not penetrate and is provided so as to cover the channel region excluding the introduction section of the conditioning solution and the specimen introduction section. The regulating member can suppress evaporation of the specimen or the like from the channel region.

<Conditioning method>

The conditioning method in this example will be described with reference to Fig. 13.

Conditioning was performed prior to electrolyte concentration measurements. In this example, the conditioning introduction section includes a conditioning introduction section 22 in the channel region 19 and a conditioning introduction section 23 above the ion selective membrane 8. However, the introduction sections for conditioning may be provided in the channel region 19 and above the ion selective membrane 8, respectively, and are not limited thereto. And the introduction section 22 may be provided above the reference electrode 7 or above the ionic crystal 6 as long as it is not in contact with the ion selective membrane 8, and there is no problem as long as the introduction section 23 is not in contact with the channel 19.

As conditioning solution S4, 10 $\mu$L of NaCl 3 mol/L aqueous solution was introduced into the introduction section 22. Further, 10 $\mu$L of NaCl 1 mmol/L aqueous solution was introduced into the conditioning introduction section 23 as the conditioning solution S5. After the conditioning solution was introduced into each introduction section, the conditioning solution permeated into the channel region 19.

<Measurement of specimen concentration>

A method of measuring the specimen concentration will be described with reference to Fig. 14.

In this example, the measurement introduction section 24 includes proximity portion 20 and proximity portion 21. At this time, 30 $\mu$L of the specimen was dropped into the measurement introduction section 24. Since the specimen was dropped onto the ion selective membrane 8, ions in the specimen were taken into the ion selective membrane immediately after dropping, reacted with the electrode, and started to stabilize the potential. Thereafter, the specimen dropped into the measurement introduction section 24 dissolved the ionic crystal 6 and reached the reference electrode 7, but the working electrode 9 and the reference electrode 7 were electrically connected by the specimen to enable concentration measurement, and the measurement of the specimen was completed in a predetermined measurement time.

Although the channel of the present invention has been described as an example of a channel enclosed by a channel wall formed of a hydrophobic resin provided in an inside of a porous substrate, a channel may be formed by using a hydrophobic sheet such as PET as the substrate and the surface thereof may be subject to plasma treatment, corona discharge treatment, or surface coating treatment with a hydrophilic polymer to make it hydrophilic. As the hydrophilic polymer, for example, polyethylene glycol (PEG), EVAL (EVOH), POVAL (PVOH) or a polymer having a phosphorylcholine group can be used. The coating layer may be obtained by applying and drying a compounding solution comprising hydrophilic inorganic fine particles, polymer fine particles dispersed in a water medium, and a reactive organic fluorine compound. The specimen can move due to the hydrophilicity of the channel. Further, when the regulating member as in Example 2 is provided on the channel to have the channel and the air gap, the capillary phenomenon due to the air gap between the channel and the regulating member is also added, so that the movement of the specimen can be accelerated. A hydrophobic sheet may be used as the substrate, and a channel of the porous substrate may be provided on the surface of the sheet. The channel of the present invention can be used as long as it is a hydrophilic channel enclosed by a hydrophobic channel wall. The amount of the conditioning solution to be introduced into the channel region may be adjusted according to the size of the channel region.

Further, in this example, a working electrode covered with a coating membrane containing a compound having ion selectivity corresponding to ions to be detected by the working electrode has been described, but the presence or absence of the coating membrane may be determined depending on the type of ions to be detected.

In the electrolyte measurement, before the ion selective membrane of the working electrode is stabilized and the measurement is completed, a solution introduced onto the reference electrode, or a saturated ion solution produced by arranging Cl ionic crystal or the like on the reference electrode may flow backward to the working electrode side. In the analytical device according to the embodiment of the present invention, a region where the reference electrode and the working electrode are provided is separated by a channel wall. Therefore, it is possible to perform conditioning by allowing the solution to penetrate only into each of them. At the time of measurement, the working electrode and the reference electrode can be electrically connected by introducing the specimen. As a result, a stable potential value can be obtained before the crystal arranged in the region where the reference electrode is provided flows back to the working electrode or the conditioning solution for the reference electrode reaches the working electrode.

The present invention is not limited to the embodiments described above, and various changes and modifications are possible without departing from the spirit and scope of the present invention. Accordingly, the following claims are appended hereto in order to make the scope of the present invention public.

The present application claims priority based on Japanese Patent Application No. 2023-078164 filed on May 10, 2023, and Japanese Patent Application No. 2024-073960 filed on April 30, 2024, all of which are incorporated herein by their reference.

[Reference Signs List]

1 first channel region
1a channel chamber
1b channel
1c proximity portion
2 second channel region
2a channel chamber
2b channel
2c proximity portion
3 channel chamber
4 channel chamber
5 channel chamber
6 ionic crystal containing Cl ion
7 reference electrode
8 ion selective membrane
9 working electrode
9a base electrode
10 reference side conditioning introduction section
11 working side conditioning introduction section
12 introduction section
13 measurement introduction section
S1 porous substrate
L1 distance between proximity portions
L4 distance between proximity portions
14 single channel region
15 introduction section
16 introduction section
17 introduction section
18 introduction section
19 first channel area
20 proximity portion
21 proximity portion
22 conditioning introduction section
23 conditioning introduction section
24 measurement introduction section
30 regulating member

**Claims**

1. An analytical device

   having a hydrophilic or porous channel region enclosed by a hydrophobic channel wall provided in an inside of or on a substrate, the analytical device having a first channel region and a working electrode,
   wherein the first channel region comprises a reference electrode provided on the substrate, and
   the working electrode is provided outside the first channel region.

2. The analytical device according to claim 1 further comprising a second channel region,

   wherein the second channel region comprises the working electrode provided on the substrate, and
   the first channel region and the second channel region being separated from each other by the channel wall.

3. The analytical device according to claim 2, wherein the device comprises two or more second channel regions relative to one first channel region.

4. The analytical device according to claim 2 or 3, wherein a portion of the first channel region and a portion of the second channel region are located within a distance L from each other, and the distance L is less than or equal to the diameter of a droplet of a specimen to be introduced.

5. The analytical device according to claim 4, wherein a region including a circle having a diameter of the distance L, the region including the portion of the first channel region and the portion of the second channel region and a portion of the channel wall separating them, serves as a measurement introduction section for introducing the specimen during measurement.

6. The analytical device according to any one of claims 2 to 5, wherein each of the first channel region and the second channel region further comprises an introduction section.

7. A method of measuring an electrolyte concentration using an analytical device according to any one of claims 2 to 6, wherein a specimen is introduced into a measurement introduction section to electrically connect the first channel region and the second channel region, and a potential difference between the reference electrode and the working electrode caused by a difference between a reference ion concentration in the first channel region and an ion concentration derived from the specimen in the second channel region is measured.

8. The method of measuring an electrolyte concentration according to claim 7, wherein a first conditioning solution containing chloride ion is introduced into the first channel region before the specimen is introduced into the measurement introduction section.

9. The method of measuring an electrolyte concentration according to claim 7 or 8, wherein a second conditioning solution containing an ion to be detected by the working electrode is introduced into the second channel region before the specimen is introduced into the measurement introduction section.

10. The method of measuring an electrolyte concentration according to any one of claims 7 to 9, wherein the specimen is introduced into the second channel region before the specimen is introduced into the measurement introduction section.

11. The analytical device according to claim 1, wherein the device comprises two or more working electrodes relative to one first channel region.

12. The analytical device according to claim 1 or 11, wherein a portion of the first channel region and a portion of the working electrode are located within a distance L from each other, and the distance L is less than or equal to the diameter of a droplet of a specimen to be introduced.

13. The analytical device according to claim 12, wherein a region including a circle having a diameter of the distance L, the region including the portion of the first channel region and the portion of the working electrode and a portion of the channel wall separating them, serves as a measurement introduction section for introducing the specimen during measurement.

14. The analytical device according to any one of claim 1 and claims 11 to 13, wherein each of the first channel region and the working electrode further comprises an introduction section.

15. The method of measuring an electrolyte concentration using an analytical device according to any one of claim 1 and claims 11 to 13, wherein a specimen is introduced into a measurement introduction section to electrically connect the first channel region and the working electrode, and a potential difference between the reference electrode and the working electrode caused by a difference between a reference ion concentration in the first channel region and an ion concentration of the working electrode derived from the specimen is measured.

16. The method of measuring an electrolyte concentration according to claim 15, wherein a first conditioning solution containing chloride ion is introduced into the first channel region before the specimen is introduced into the measurement introduction section.

17. The method of measuring an electrolyte concentration according to claim 15 or 16, wherein a second conditioning solution containing an ion to be detected by the working electrode is introduced to the working electrode before the specimen is introduced into the measurement introduction section.

18. The method of measuring an electrolyte concentration according to any one of claims 15 to 17, wherein the specimen is introduced to the working electrode before the specimen is introduced into the measurement introduction section.

# FIG. 1

# FIG. 2

# FIG. 3

Volume of the droplet V1

h1

r1

θ1

# FIG. 4

# FIG. 5

12

# FIG. 6

# FIG. 7

# FIG. 8

EP 4 711 752 A1

# FIG. 9

17          18

23

# FIG. 10

REACH THE
REFERENCE/
WORKING
ELECTRODE

START OF MEASUREMENT
(STABILIZATION OF WORKING
ELECTRODE POTENTIAL)

BACKFLOW INITIATION
(ALL OF THE SPECIMEN
HAS PENETRATED INTO
CHANNEL CHAMBER 1a)

BACKFLOW ARRIVAL

SPECIMEN
INTRODUCTION

END OF
MEASUREMENT

TIME

TIME TO PEMETRATE
THE CHANNEL CHAMBER 1a
CONTAIN THE REFERENCE
ELECTRODE

TIME FOR CI CRYSTALS
TO REACH THE
WORKING ELECTRODE
BY REVERSE FLOW

TIME UNTIL THE WORKING
ELECTRODE POTENTIAL
STABILIZES AND
THE MEASUREMENT IS
COMPLETED

# FIG. 11

# FIG. 12A

P2

# FIG. 12B

P2

# FIG. 13

# FIG. 14

## INTERNATIONAL SEARCH REPORT

| | International application No. |
|---|---|
| | **PCT/JP2024/017218** |

**A. CLASSIFICATION OF SUBJECT MATTER**

*G01N 27/28*(2006.01)i; *B01J 19/00*(2006.01)i; *G01N 27/333*(2006.01)i; *G01N 27/416*(2006.01)i
FI: G01N27/28 321Z; G01N27/416 361A; G01N27/333 331M; B01J19/00 321

According to International Patent Classification (IPC) or to both national classification and IPC

**B. FIELDS SEARCHED**

Minimum documentation searched (classification system followed by classification symbols)

G01N27/28; B01J19/00; G01N27/333; G01N27/416

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); Scopus

**C. DOCUMENTS CONSIDERED TO BE RELEVANT**

| Category* | Citation of document, with indication, where appropriate, of the relevant passages | Relevant to claim No. |
|---|---|---|
| X | PETRONI, J. M. et al., Paper-based Electrochemical Devices Coupled to External Graphene-Cu Nanoparticles Modified Solid Electrode through Meniscus Configuration and their Use in Biological Analysis, Electroanalysis, 2017, vol. 29, pages 2628-2637, SIp. 1-7, DOI: 10.1002/elan.201700398 abstract, page 2629, right column, fourth paragraph to page 2630, left column, first paragraph, page 2630, right column, fourth paragraph, fig. 1, S1 | 1, 12, 15-17 |
| A | entire text, all drawings | 2-11, 13-14, 18 |
| X | D. OLIVEIRA, T. R. et al., Fast and flexible strategy to produce electrochemical paper-based analytical devices using a craft cutter printer to create wax barrier and screen-printed electrodes, Talanta, 2019, vol. 195, pages 480-489, https://doi.org/10.1016/j.talanta.2018.11.047 abstract, page 480, left column, first paragraph to page 480, right column, first paragraph, page 482, left column, second paragraph to page 482, right column, second paragraph, page 483, left column, sixth paragraph to page 483, right column, third paragraph, fig. 1-3 | 1-4, 11 |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 May 2024** | **11 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

# EP 4 711 752 A1

## INTERNATIONAL SEARCH REPORT

### C. DOCUMENTS CONSIDERED TO BE RELEVANT

| Category* | Citation of document, with indication, where appropriate, of the relevant passages | Relevant to claim No. |
|---|---|---|
| X | HU, J. et al., All-Solid-State Reference Electrodes Based on Colloid-Imprinted Mesoporous Carbon and Their Application in Disposable Paperbased Potentiometric Sensing Devices, Anal. Chem., 2015<br>abstract, page 2981, right column, first paragraph, page 2983, left column, first to second paragraphs, page 2985, left column, second paragraph to page 2986, left column, first paragraph, fig. 4b, 5 | 1, 7, 15 |
| A | JP 2023-48922 A (CANON KABUSHIKI KAISHA) 07 April 2023 (2023-04-07)<br>paragraphs [0013], [0048]-[0051], [0059], fig. 2, 7 | 1-18 |
| A | JP 2002-39990 A (FUJI PHOTO FILM CO., LTD.) 06 February 2002 (2002-02-06)<br>paragraphs [0004], [0033]-[0034], fig. 5 | 1-18 |
| A | JP 2014-6086 A (SHARP CORP.) 16 January 2014 (2014-01-16)<br>entire text, all drawings | 1-18 |
| A | US 2016/0033438 A1 (PRESIDENT AND FELLOWS OF HARVARD COLLEGE) 04 February 2016 (2016-02-04)<br>entire text, all drawings | 1-18 |

Form PCT/ISA/210 (second sheet) (July 2022)

**INTERNATIONAL SEARCH REPORT**
Information on patent family members

International application No.

**PCT/JP2024/017218**

| Patent document cited in search report | | | Publication date (day/month/year) | Patent family member(s) | | | Publication date (day/month/year) |
|---|---|---|---|---|---|---|---|
| JP | 2023-48922 | A | 07 April 2023 | WO | 2023/054092 | A1 | |
| JP | 2002-39990 | A | 06 February 2002 | US | 2002/0033335 | A1 | |
| | | | | paragraphs [0003], [0056]-[0057], fig. 5 | | | |
| | | | | EP | 1174711 | A2 | |
| JP | 2014-6086 | A | 16 January 2014 | (Family: none) | | | |
| US | 2016/0033438 | A1 | 04 February 2016 | WO | 2014/149611 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016033438
- JP 2021037612 A
- JP 2023078164 A
- JP 2024073960 A

**Non-patent literature cited in the description**

- **NIPAPAN RUECHA** ; **ORAWON CHAILAPAKUL** ; **KOJI SUZUKI** ; **DANIEL CITTERIO**. Fully Inkjet-Printed Paper-Based Potentiometric Ion-Sensing Devices. *Analytical chemistry*, 29 August 2017, vol. 89, 10608-10616
- I want to measure ion concentration with an electrode. Dojindo Laboratories Co., Ltd, 138-140